# EUROPÄISCHE PATENTSCHRIFT

(11) **EP 2 018 696 B1**
(45) Veröffentlichungstag und Bekanntmachung des Hinweises auf die Patenterteilung: **14.08.2019**
(21) Anmeldenummer: 07728378.6
(22) Anmeldetag: 23.04.2007
(51) Int. Cl.: H02K 1/27

(54) **ELEKTRISCHE MASCHINE**
ELECTRICAL MACHINE
MACHINE ELECTRIQUE

(30) Priorität: 09.05.2006 DE 102006021489
(43) Veröffentlichungstag der Anmeldung: 28.01.2009
(73) Patentinhaber: Robert Bosch GmbH, 70442 Stuttgart (DE)
(72) Erfinder: NIPP, Eckhart, 6805 Feldkirch-Gisingen (AT)
(86) Internationale Anmeldenummer: PCT/EP2007/053921
(87) Internationale Veröffentlichungsnummer: WO 2007/128673

(56) Entgegenhaltungen:
- EP-A1- 2 061 132
- WO-A-2004/019467
- KR-A- 20150 050 464
- US-A- 6 008 559
- US-A1- 2002 171 309
- US-A1- 2005 162 029

## Beschreibung

### Stand der Technik

Die Erfindung betrifft eine elektrische Maschine, insbesondere eine permanenterregte Synchronmaschine, nach dem Oberbegriff des Anspruchs 1.

In vielen drehzahlgeregelten elektrischen Antrieben wird der Effekt der Feldschwächung eingesetzt, um den verfügbaren Drehzahlbereich deutlich zu höheren Drehzahlen hin auszudehnen, ohne ein Antriebssystem mit höherer Leistung einzusetzen. Es ergeben sich dann zwei Drehzahlbereiche. Ein erster Drehzahlbereich unterhalb der Grenzdrehzahl, in dem die Spannung praktisch proportional zur Drehzahl steigt, und einen zweiten Drehzahlbereich oberhalb der Grenzdrehzahl, in der die verfügbare Spannung voll ausgenutzt ist und konstant gehalten wird, was bei ebenso konstantem Strom einer näherungsweise konstanten Leistung entspricht. Dieser zweite Drehzahlbereich wird Feldschwächung genannt, da das Erregerfeld mit zunehmender Drehzahl reduziert wird.

Bei permanentmagneterregten Synchronmaschinen kann die Erregung nicht direkt reduziert werden, um das Feld in der Maschine und damit die induzierte Spannung zu verringern. Stattdessen werden die Ströme in den Statorwicklungen so gesteuert, dass von diesen ein Feld aufgebaut wird, das dem der Permanentmagnete entgegen wirkt, womit dann das resultierende Feld verringert wird. In der klassischen Zwei-Achsentheorie (DQ-Koordinatensystem) entspricht dies einem negativen D-Strom. Anders ausgedrückt entspricht das Verfahren einem kontinuierlichen Vorziehen des Steuerwinkels mit steigender Drehzahl. Das Verfahren ist sowohl bei sinusförmig bestromten Maschinen einsetzbar, als auch bei Blockkommutierung, wo dann üblicherweise von Vorkommutierung gesprochen wird. Der Effekt ist mit einem mechanischen Schaltgetriebe vergleichbar, jedoch auf rein elektrische Weise, ohne zusätzliche Komponenten und stufenlos.

Bei weitem Feldschwächbereich mit entsprechend starken Gegenfeldern zu den Permanentmagneten besteht das Risiko der Entmagnetisierung, wenn auch nur in Teilbereichen der Magnete. Dieses Risiko steigt bei Ferritmagneten mit sinkenden, bei Seltenerdmagneten (NdFeB, SmCo) mit steigenden Temperaturen. Wird das Gesamtfeld, das aus der Überlagerung eines permanentmagneterregten Feldes und eines durch einen negativen D-Strom verursachten Gegenfeldes resultiert, zu stark reduziert oder gar umgepolt, kann, je nach Magnetmaterial und Temperatur, irreversible Entmagnetisierung auftreten. Diesem Effekt kann nicht mit dickeren Magneten entgegen gewirkt werden, da dann die Induktivität aufgrund des längeren effektiven Luftspaltes sinkt und somit ein höherer D-Strom zur Feldschwächung erforderlich wird. Nicht nur bei Oberflächenmagneten, sondern auch bei im Innern des Rotors angeordneten Magneten (sogenannte vergrabene Magnete) ist der Effekt grundsätzlich vorhanden.

Im Allgemeinen werden bei permanentmagneterregten Synchronmaschinenantrieben für einen weiten Feldschwächbereich die Maschinenparameter und Betriebsgrenzen so aufeinander abgestimmt, dass keine Entmagnetisierung auftritt. Dies schränkt jedoch den Auslegungsspielraum stark ein. Speziell bei Fahrzeugtraktionsantrieben können die Einschränkungen erheblich sein, da einerseits die Erweiterung des Geschwindigkeitsbereichs bis zum fünffachen der Grenzdrehzahl gefordert wird, was starke Feldschwächung nötig macht, andererseits der abzudeckende Temperaturbereich sehr groß ist (z.B. -40°C bis +120°C). Aus dem Stand der Technik sind permanentmagneterregte Synchronmaschinen mit im Innern des Rotors liegenden Permanentmagneten bekannt, die Flussbarrieren z.B. zur Verringerung der Querachseninduktivität aufweisen. Aus WO 2004/051824 A ist ein bürstenloser Synchronmotor mit im Innern des Rotors liegenden Permanentmagneten bekannt, bei dem zur Erzielung einer magnetischen Anisotropie in den Polschuhen Flussbarrieren in Form von einer Mehrzahl voneinander beabstandeten Aussparungen angeordnet sind, die parallel zur radialen Schenkelpolachse verlaufen. Durch derartige Flussbarrieren wird ein sinusförmiger Verlauf der induzierten Spannung (Elektromotorische Kraft EMK) erzielt.

Aus der US 2002/0171309 A1 sind Flussbarrieren mit zur Polmitte gerichteten Vorsprüngen bekannt.

Aufgabe der Erfindung ist es, eine elektrische Maschine, insbesondere eine permanentmagneterregte Synchronmaschine, mit einem weiten Feldschwächbereich bereitzustellen, ohne dass eine Entmagnetisierung der Permanentmagnete auftritt.

### Offenbarung der Erfindung

Die erfindungsgemäße elektrische Maschine weist einen Rotor auf, der vorteilhafterweise so gestaltet ist, dass das von dem negativen D-Strom erzeugte Gegenfeld des Stators die Permanentmagnete nur teilweise, d.h. mit reduzierter Flussdichte, erreicht. Dies wird dadurch erzielt, dass Flussbarrieren in dem Rotorkörper im Bereich zwischen den Permanentmagneten und der Oberfläche des Rotorkörpers vorgesehen sind, deren Dicke h_{b} geringer ist als die Dicke hₘ der Permanentmagnete und größer als die Breite des Luftspalts zwischen Stator und Rotor. Die Flussbarrieren sind demnach dergestalt, dass sie für den Magnetfluss einen geringeren Luftspalt als die Magnete darstellen und so einen Alternativpfad für den Gegenfluss des Stators in der D-Achse bilden. Dadurch werden die Permanentmagnete von dem Gegenfeld entlastet. Diese Verringerung der Feldstärke des Gegenfeldes im Bereich der Permanentmagnete erlaubt es, ein wesentlich stärkeres Statorgegenfeld einzusetzen, ohne dass eine irreversible Entmagnetisierung der Permanentmagnete eintritt. Das Statorgegenfeld kann beispielsweise bis zu dreimal so stark sein wie ein Statorgegenfeld bei einer herkömmlichen elektrischen Maschine ohne Flussbarrieren. Infolgedessen ist ein weiter Feldschwächbereich, z.B. bis zum Zehnfachen der Grenzdrehzahl, mit starken negativen D-Strömen bis zum Dreifachen des Nennstroms, auch über weite Temperaturbereiche, beispielsweise von -40°C bis +120°C bei NdFeB-Magneten, möglich.

In einer erfindungsgemäßen Ausgestaltung weisen die Flussbarrieren im Bereich der Oberfläche des Rotorkörpers einen Vorsprung auf. "Im Bereich der Oberfläche des Rotorkörpers" bedeutet, dass das zur Oberfläche des Rotorkörpers hin weisende Ende der Flussbarriere mit einem Vorsprung versehen ist. Im Bereich des Vorsprungs ist die Breite h_{b} der Flussbarriere größer als im übrigen Bereich der Flussbarriere. Im Bereich des Vorsprungs ist die Breite bevorzugt um 50% bis 200% größer als die Breite der Flussbarriere. Der Vorsprung ist erfindungsgemäß in Richtung zu der Pollücke gerichtet. Er kann jedoch auch in beide Richtungen, zu der Pollücke und zu der Polmitte, weisen. Durch diesen Vorsprung nahe der Rotoroberfläche kann das Rastmoment beeinflusst werden. Der Vorsprung bewirkt einen, von dem Stator aus betrachtet, weicheren Polübergang, da die Eisenbrücke gesättigt ist, weshalb ein niedrigeres Rastmoment erzielt werden kann. Ein weiterer Vorteil einer Flussbarriere mit Vorsprung ist, dass der Streusteg (Eisenbrücke) an der Rotoroberfläche länger ist als bei einer Flussbarriere ohne Vorsprung, was bei gleicher Breite des Streustegs zu einer Verringerung des Streuflussanteils im Rotor führt.

Außerdem findet der vom drehmomentbildenden Q-Strom ausgehende Magnetfluss in der Rotorquerachse sowohl im Polzwischenraum als auch im Eisen zwischen den Flussbarrieren und den Magneten Pfade, die die Magnete nicht erreichen. Daher bewirkt auch das Statorquerfeld praktisch keine Entmagnetisierung.

Bei der erfindungsgemäßen elektrischen Maschine in Innenläuferbauweise handelt es sich insbesondere um eine permanenterregte Synchronmaschine mit einem Stator, einem Rotor und einem zwischen Stator und Rotor angeordneten Luftspalt. Der Stator weist ein außenliegendes Rückschlussjoch und an dem Rückschlussjoch in radialer Richtung nach innen gerichteten Statorzähne mit dazwischen liegenden Nuten auf. Die Nuten dienen zur Aufnahme einer Statorwicklung. Innerhalb des Stators ist ein Rotor auf einer Rotorwelle drehfest gelagert, wobei der Rotor zumindest aus einem Rotorkörper besteht, der im Innern Permanentmagnete und Flussbarrieren aufweist. Die Permanentmagnete sind in den Rotorkörper eingebettet, d.h. die Permanentmagnete sind von dem Rotorkörper vollständig umgeben (sogenannte vergrabene oder verdeckte Permanentmagnete). Der Rotorkörper besteht insbesondere aus Blechlamellen, die in axialer Richtung aneinander gereiht ein
Lamellenpaket bilden. Der Rotorkörper hat eine, insbesondere zentrale, Öffnung zur Aufnahme einer Rotorwelle.

In herkömmlichen permanentmagneterregten Synchronmaschinen sind die Permanentmagnete nahe der Rotorkörperoberfläche in den Rotorkörper eingebettet, so dass schmale magnetisch gesättigte Eisenbrücken im Bereich der Polkanten gebildet werden. In der erfindungsgemäßen elektrischen Maschine sind die Magnete jedoch so weit von der Oberfläche entfernt im Innern des Rotorkörpers angeordnet, dass Flussbarrieren, deren Dicke h_{b} geringer als die Dicke hₘ der Permanentmagnete und größer als die Breite des Luftspalts ist, zwischen den Magneten und der Rotorkörperoberfläche positionierbar sind.

Bei den Flussbarrieren handelt es sich insbesondere um Ausnehmungen in dem Rotorkörper, die sich in axialer Richtung, vorzugsweise auf der gesamten axialen Länge des Rotorkörpers, erstrecken. Die Ausnehmungen sind vorzugsweise schlitzförmig, gegebenenfalls mit abgerundeten Ecken. Eine bogenförmig parallele Anordnung der Schlitzkannten ist ebenso möglich. Bevorzugt sind Flussbarrieren in Form von Luftschlitzen vorgesehen. Die Flussbarrieren können jedoch auch Einschlüsse von magnetisch nicht leitfähigem Material sein.

Die Flussbarrieren befinden sich im Bereich zwischen den Permanentmagneten und der Oberfläche des Rotorkörpers, insbesondere im Bereich zwischen den Polkanten und der Oberfläche des Rotorkörpers.

Die Flussbarrieren verhindern einerseits einen übermäßigen magnetischen Kurzschluss, d.h. sie reduzieren die Streuung des Flusses der weiter im Innern des Rotorkörpers liegenden Magnete. Andererseits kann ein Gegenfeld des Stators, das durch einen negativen D-Strom in Gegenrichtung zur Magnetisierung erzeugt wird, diese Flussbarrieren teilweise passieren. Um dies zu ermöglichen, ist die Dicke h_{b} der Flussbarrieren geringer gewählt als die Dicke hₘ der Magnete, jedoch groß gegenüber dem Arbeitsluftspalt zwischen Rotor und Stator. Die Breite b_{b} der Flussbarrieren wird möglichst groß gewählt, wobei jedoch ein Kompromiss erforderlich ist, um eine übermäßige Streuung des Magnetflusses im Rotor zu vermeiden. Ist die Dicke h_{b} der Flussbarriere groß gegenüber dem Luftspalt und die Breite b_{b} nicht zu groß, so bewirken die Flussbarrieren zwar eine Streuung des Magnetflusses, jedoch passiert der überwiegende Anteil den Arbeitsluftspalt und wird im Stator mit der Wicklung verkettet. Die Eisenbrücken werden gesättigt.

Die Dicke h_{b} der Flussbarrieren ist geringer als die Dicke hₘ der Permanentmagnete, vorzugsweise ist die Dicke h_{b} um mindestens die Hälfte geringer als die Dicke hₘ der Permanentmagnete. Die Dicke h_{b} der Flussbarrieren ist größer als die Breite des Luftspalts, vorzugsweise ist die Dicke h_{b} um mindestens das Doppelte größer als die Breite des Luftspalts.

Vorzugsweise ist die Breite b_{b} der Flussbarrieren größer als die Dicke hₘ der Permanentmagnete. Insbesondere ist die Breite b_{b} der Flussbarrieren um mindestens die Hälfte größer als die Dicke hₘ der Permanentmagnete. Außerdem ist vorzugsweise die Breite b_{b} der Flussbarrieren mindestens doppelt so groß wie die Dicke h_{b} der Flussbarrieren. Diese Maßnahmen dienen der Vermeidung von magnetischer Sättigung im Eisen im Bereich nahe der langen Kanten der Flussbarrieren. Weiterhin ist vorzugsweise die Magnetpolbreite im Innern größer als die Polbreite an der Rotoroberfläche. Dadurch wird die Flussdichte des Statorgegenfeldes am Ort der Permanentmagnete weiter herabgesetzt. Insbesondere wird in der Pollücke ein Pfad geringer Reluktanz zur Verfügung gestellt, über den sich ein erheblicher Anteil des Statorgegenfeldes schließen kann, ohne dass dieser den Bereich der Magnete überhaupt erreicht.

In einer bevorzugten Ausführungsform ist der Magnetöffhungswinkel größer als der Polwinkel. Insbesondere ist der Magnetöffnungswinkel um mindestens 20% größer als der Polwinkel.

Die Flussbarrieren können radial ausgerichtet sein. Sie sind jedoch gemäß einer bevorzugten Ausführungsform in Richtung zur Polmitte geneigt. Die Neigung liegt im Bereich von 10 bis 45 Grad. Gegenüber einer radialen Ausrichtung der Flussbarrieren ermöglicht dies eine zusätzliche Konzentration des Magnetflusses zur Polmitte hin, wodurch einerseits die Flussdichte in der Polmitte erhöht wird andererseits, der Oberwellengehalt beeinflusst werden kann, z.B. eine Unterdrückung der dritten Oberwelle bei im Dreieck verschalteten Motoren erzielt werden kann.

Der Rotorkörper weist zur Aufnahme der Permanentmagnete Ausnehmungen auf, die sich in axialer Richtung erstrecken. Insbesondere erstrecken sich die Ausnehmungen über die gesamte axiale Länge des Rotorkörpers, d.h. von einer Stirnseite zur anderen Stirnseite des Rotorkörpers. Die Permanentmagnete sind insbesondere quaderförmig. Dementsprechend sind die Ausnehmungen schlitzförmig. Die Permanentmagnete sind mittels Klebeverbindung in den Schlitzen des Rotorkerns befestigt.

In einer ersten Ausführungsform sind die Permanentmagnete senkrecht zu einer radialen Achse des Rotorkörpers ausgerichtet. Dabei sind die Magnete in Rotationsrichtung des Rotors bevorzugt im Wesentlichen äquidistant angeordnet. Im Bereich der Seitenkanten der Permanentmagnete ist mindestens eine, vorzugsweise jeweils mindestens eine Flussbarriere vorgesehen. Es können auch zwei oder mehrere Flussbarrieren an mindestens einer der Seitenkanten der Magnete vorgesehen sein. Die Flussbarrieren sind bevorzugt unmittelbar benachbart zu den Seitenkanten der Magnete angeordnet und weisen radial oder zur Polmitte geneigt in Richtung der Rotorkörperoberfläche.

In einer zweiten Ausführungsform sind die Permanentmagnete in radialer Richtung im Innern des Rotorkörpers ausgerichtet. Dabei weist jeweils eine Seitenkante eines Magneten zum Mittelpunkt des Rotorkörpers und eine Seitenkante in Richtung zur Oberfläche des Rotorkörpers. Im Bereich der in Richtung zur Oberfläche des Rotorkörpers weisenden Seitenkanten der Magnete ist mindestens eine Flussbarriere, vorzugsweise ist an jeder derartigen Seitenkante jeweils mindestens eine Flussbarriere vorgesehen, wobei die Flussbarrieren radial oder zur Polmitte geneigt ausgerichtet sind. Es können auch zwei oder mehrere Flussbarrieren an mindestens einer der zur Oberfläche des Rotorkörpers weisenden Seitenkanten der Magnete vorgesehen sein. Insbesondere sind die Flussbarrieren unmittelbar benachbart zu der in Richtung zur Oberfläche des Rotorkörpers weisenden Seitenkante eines Magneten angeordnet.

In einer dritten Ausführungsform sind jeweils zwei Permanentmagnete im Wesentlichen V-förmig zueinander im Innern des Rotorkörpers ausgerichtet. Bei einer im Wesentlichen V-förmigen Anordnung der Magnete weist jeweils eine Seitenkante der Magnete in das Innere des Rotorkörpers. "Im Wesentlichen V-förmig" bedeutet, dass die beiden Permanentmagnete entweder V-förmig oder annähernd V-förmig zueinander angeordnet sein können. Bei einer V-förmigen Anordnung der Magnete sind die beiden in das Innere des Rotorkörpers weisende Seitenkanten, insbesondere unmittelbar, benachbart zueinander angeordnet. Bei einer annähernd V-förmigen Anordnung weisen die beiden in das Innere des Rotorkörpers weisende Seitenkanten aufeinander zu, sind aber voneinander beabstandet angeordnet. Auch in der dritten Ausführungsform mit im Wesentlichen V-förmig angeordneten Magneten ist mindestens eine Flussbarriere, vorzugsweise an jeder derartigen Seitenkante jeweils mindestens eine Flussbarriere, im Bereich der zu der Oberfläche des Rotorkörpers weisenden Seitenkanten der Permanentmagnete vorgesehen. Es können auch zwei oder mehrere Flussbarrieren an mindestens einer der zur Oberfläche des Rotorkörpers weisenden Seitenkanten der Magnete vorgesehen sein. Die Flussbarrieren sind dabei wiederum entweder radial oder aber bevorzugt zur Polmitte geneigt ausgerichtet.

Nachfolgend wird die Erfindung anhand der beigefügten Zeichnungen näher erläutert. Es zeigen
- Fig. 1: einen Ausschnitt aus einer ersten Ausführungsform einer nichterfindungsgemäßen elektrischen Maschine im Querschnitt
- Fig. 2: einen Ausschnitt aus einer zweiten Ausführungsform einer nichterfindungsgemäßen elektrischen Maschine im Querschnitt
- Fig. 3: einen Ausschnitt aus einer dritten Ausführungsform einer nichterfindungsgemäßen elektrischen Maschine im Querschnitt
- Fig. 4a, 4b, 4c: die Feldlinien des Magnetflusses, des Statorgegenfeldes und des Gesamtfeldes einer elektrischen Maschine nach der dritten Ausführungsform im Querschnitt
- Fig. 5: einen Ausschnitt aus einer Ausführungsform einer erfindungsgemäßen elektrischen Maschine.

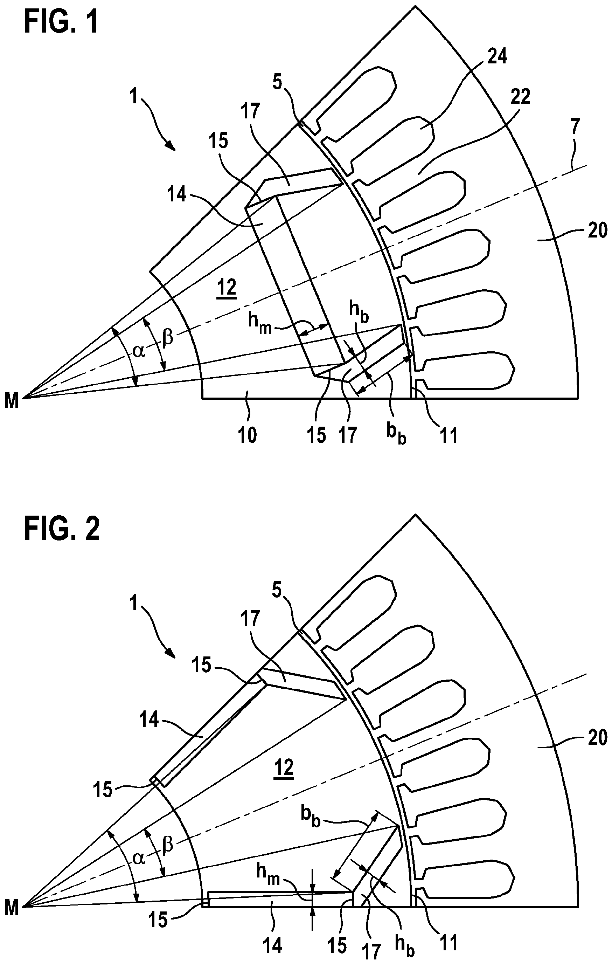

In Fig. 1 ist ein Ausschnitt aus einer ersten Ausführungsform einer permanentmagneterregten Synchronmaschine dargestellt. Die Synchronmaschine 1 in Innenläuferbauweise umfasst einen außenliegenden Stator 20 und einen innenliegenden Rotor 10 sowie einen zwischen Stator 20 und Rotor 10 angeordneten Luftspalt 5. Der Stator 20 weist Statorzähne 22 und zwischen den
Statorzähnen 22 liegende Nuten 24 auf. Der Rotor 10 besteht aus einem Rotorkörper 12 mit Permanentmagnete 14 im Innern des Rotorkörpers 12.

Gemäß Fig. 1 sind die Permanentmagnete 14 senkrecht zu einer radialen Achse 7 des Rotorkörpers 12 ausgerichtet. Im Bereich der Seitenkanten 15 der Permanentmagnete 14 ist jeweils eine Flussbarriere 17 vorgesehen. Die Flussbarrieren 17 sind unmittelbar benachbart zu den Seitenkanten 15 der Magnete 14 angeordnet. Sie grenzen an die Seitenkanten 15 an. Die Flussbarrieren 17 sind zur Polmitte geneigt und weisen in Richtung der Oberfläche 11 des Rotorkörpers 12.

In Fig. 2 ist eine zweite Ausführungsform einer permanentmagneterregten Synchronmaschine 1 im Ausschnitt gezeigt. Hierbei sind die Permanentmagnete 14 in radialer Richtung im Innern des Rotorkörpers 12 ausgerichtet. Dabei weist jeweils eine Seitenkante 15 eines Magneten 14 zum Mittelpunkt M des Rotorkörpers 12und eine Seitenkante 15 in Richtung zur Oberfläche 11 des Rotorkörpers 12. Benachbart zu der in Richtung zur Oberfläche 11 des Rotorkörpers 12 weisenden Seitenkante 15 eines Magneten 14 ist jeweils eine Flussbarriere 17 vorgesehen, wobei die Flussbarriere 17 in der dargestellten Ausführungsform zur Polmitte geneigt ausgerichtet ist.

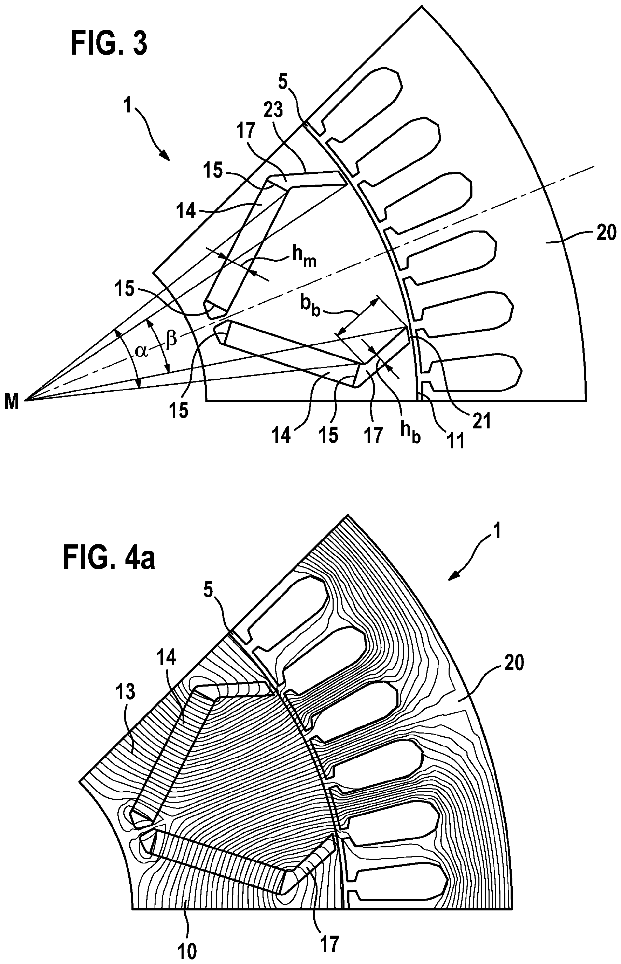

In einer dritten Ausführungsform einer permanentmagneterregten Synchronmaschine 1 gemäß Fig. 3 sind jeweils zwei Permanentmagnete 14 im Wesentlichen V-förmig zueinander im Innern des Rotorkörpers 12 ausgerichtet. Dabei weist jeweils eine Seitenkante 15 der Magnete 14 in das Innere des Rotorkörpers 12, so dass die beiden in das Innere des Rotorkörpers 12 weisenden Seitenkanten 15 unmittelbar benachbart zueinander angeordnet sind. Auch gemäß Fig. 3 ist jeweils eine Flussbarriere 17 im Bereich der zu der Oberfläche 11 des Rotorkörpers 12 weisenden Seitenkante 15 der Permanentmagnete 14 vorgesehen. Die Flussbarrieren 17 sind dabei wiederum zur Polmitte geneigt ausgerichtet.

In allen drei Ausführungsformen nach Fig. 1 bis 3 weisen die Kanten 23 der Flussbarrieren 17 in Richtung der Oberfläche 11 des Rotorkörpers 12.

In Fig. 1 bis 3 ist mit hₘ die Dicke der Permanentmagnete 14, mit h_{b} die Dicke der Flussbarrieren 17 und mit b_{b} die Breite der Flussbarrieren 17 bezeichnet. In allen drei Ausführungsformen nach Fig. 1 bis 3 ist die Dicke h_{b} der Flussbarrieren 17 geringer als die Dicke hₘ der Permanentmagnete 14 und größer als die Breite des Luftspalts 5. Außerdem ist die Breite b_{b} der Flussbarrieren 17 größer als die Dicke hₘ der Permanentmagnete 14. Ferner ist nach Fig. 1 bis 3 der Magnetöffnungswinkel α größer als der Polwinkel β.

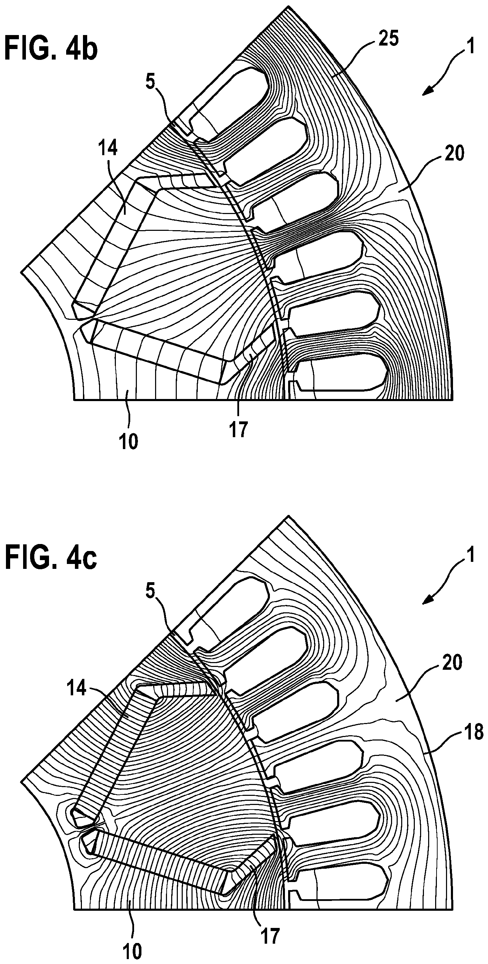

In Fig. 4a sind die Feldlinien 13 des Magnetfeldes für eine achtpolige Synchronmaschine 1 nach Fig. 3 dargestellt. Fig. 4b zeigt die Feldlinien 25 des von einem negativen D-Strom erzeugten Gegenfeldes des Stators 20. In Fig. 4c sind die Feldlinien 18 des resultierenden Gesamtfeldes gezeigt. Aus Fig. 4b ist offensichtlich, dass die Flussdichte des Gegenfeldes in den Flussbarrieren 17 signifikant höher ist als in den Magneten 14. Anhand von Fig. 4b wird offenbar, dass sich ein erheblicher Anteil des Statorflusses über die Flussbarrieren 17 schließt und somit nur ein deutlich verringerter Anteil die Magnete 14 erreicht. Insbesondere wird in der Pollücke ein Pfad geringer Reluktanz zur Verfügung gestellt, über den sich ein erheblicher Anteil des Statorgegenfeldes schließen kann, ohne dass dieser den Bereich der Magnete 14 überhaupt erreicht. Die Stromstärke wurde in der Feldberechnung gemäß Fig. 4a bis 4c ausreichend hoch für eine Geschwindigkeitsüberhöhung von ungefähr der fünffachen Grunddrehzahl gewählt.

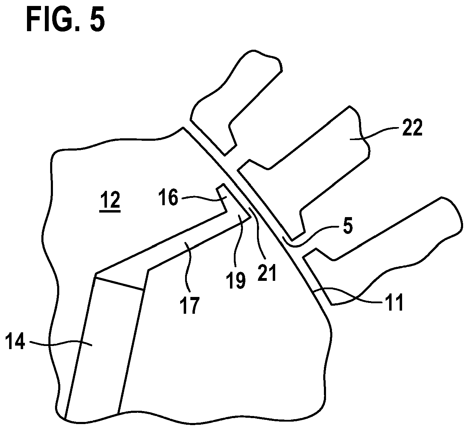

Fig. 5 zeigt einen Ausschnitt aus einer Ausführungsform einer erfindungsgemäßen permanentmagneterregten Synchronmaschine. In Fig. 5 ist ein V-förmig in dem Rotorkörper 12 angeordneter Permanentmagnet 14 und ein Stator 20 mit Statorzähnen 22 ausschnittsweise dargestellt. Die Flussbarriere 17 hat an ihrem zur Oberfläche 11 des Rotorkörpers 12 weisenden Ende 19 hat einen Vorsprung 16, der in Richtung zur Pollücke weist. Durch den Vorsprung 16 der Flussbarriere 17 wird die Eisenbrücke 21 im Vergleich zu einer Eisenbrücke 21 einer Flussbarriere 17 ohne Vorsprung 16, wie z.B. in Fig. 3 dargestellt, verlängert.

## Patentansprüche

1. Elektrische Maschine, insbesondere permanenterregte Synchronmaschine, umfassend einen Stator (20), einen innerhalb des Stators (20) drehbar gelagerten Rotor (10) und einen zwischen Stator (20) und Rotor (10) angeordneten Luftspalt (5), wobei der Rotor (10) zumindest einen Rotorkörper (12), einen quaderförmigen Permanentmagneten (14) im Innern des Rotorkörpers (12) und eine Flussbarriere (17) im Bereich zwischen Permanentmagnet (14) und Oberfläche (11) des Rotorkörpers (12) aufweist, wobei der Permanentmagnet (14) in einem Pol des Rotors (10) angeordnet ist und wobei an einem Rand des Pols Pollücken gebildet sind, wobei der Querschnitt des Permanentmagneten (14) rechteckförmig und wobei die Flussbarriere schlitzförmig ist, wobei eine Dicke des Permanentmagneten (14) bzw. der Flussbarriere jeweils die kleinere Abmessung der beiden Abmessungen des entsprechenden rechteckförmigen oder schlitzförmigen Querschnitts ist, wobei die Dicke h_{b} der Flussbarriere (17) geringer ist als die Dicke hₘ des Permanentmagneten (14) und größer als die Breite des Luftspalts (5), wobei die Flussbarriere (17) im Bereich der Oberfläche (11) des Rotorkörpers (12) einen Vorsprung (16) aufweist,
**dadurch gekennzeichnet, dass**
der Vorsprung in Richtung der Pollücke gerichtet ist.

2. Elektrische Maschine nach Anspruch 1, **dadurch gekennzeichnet, dass** die Breite b_{b} der Flussbarriere (17) größer als die Dicke hₘ des Permanentmagneten (14) ist.

3. Elektrische Maschine nach einem der Ansprüche 1 oder 2, **dadurch gekennzeichnet, dass** die Breite b_{b} der Flussbarriere (17) mindestens doppelt so groß wie die Dicke h_{b} der Flussbarriere (17) ist.

4. Elektrische Maschine nach einem der vorhergehenden Ansprüche, **dadurch gekennzeichnet, dass** die Flussbarriere (17) in Richtung zur Polmitte geneigt ist.

5. Elektrische Maschine nach einem der vorhergehenden Ansprüche, **dadurch gekennzeichnet, dass** der Magnetöffnungswinkel α größer als der Polwinkel β ist.

6. Elektrische Maschine nach einem der Ansprüche 1-5, **dadurch gekennzeichnet, dass** die Permanentmagnete (14) senkrecht zu einer radialen Achse (7) des Rotorkörpers (12) ausgerichtet sind.

7. Elektrische Maschine nach Anspruch 6, **dadurch gekennzeichnet, dass** im Bereich der Seitenkanten (15) der Permanentmagnete (14) mindestens eine Flussbarriere (17) vorgesehen ist.

8. Elektrische Maschine nach einem der Ansprüche 1-5, **dadurch gekennzeichnet, dass** die Permanentmagnete (14) in radialer Richtung im Innern des Rotorkörpers (12) ausgerichtet sind.

9. Elektrische Maschine nach einem der Ansprüche 1-5, **dadurch gekennzeichnet, dass** jeweils zwei Permanentmagnete (14) im Wesentlichen V-förmig zueinander im Innern des Rotorkörpers (12) ausgerichtet sind.

10. Elektrische Maschine nach einem der Ansprüche 8 oder 9, **dadurch gekennzeichnet, dass** im Bereich der zu der Oberfläche (11) des Rotorkörpers (12) weisenden Seitenkanten (15) der Permanentmagnete (14) mindestens eine Flussbarriere (17) vorgesehen ist.

## Claims

1. Electrical machine, in particular permanent-magnet synchronous machine, comprising a stator (20), a rotor (10) which is mounted such that it can rotate within the stator (20), and an air gap (5) which is arranged between the stator (20) and the rotor (10), wherein the rotor (10) has at least one rotor body (12), one cuboidal permanent magnet (14) in the interior of the rotor body (12) and one flux barrier (17) in the region between the permanent magnet (14) and the surface (11) of the rotor body (12), wherein the permanent magnet (14) is arranged in a pole of the rotor (10) and wherein pole gaps are formed at an edge of the pole, wherein the cross section of the permanent magnet (14) is rectangular and wherein the flux barrier is slot-like, wherein a thickness of the permanent magnet (14) or of the flux barrier is in each case the smaller dimension of the two dimensions of the corresponding rectangular or slot-like cross section, wherein the thickness h_{b} of the flux barrier (17) is lower than the thickness hₘ of the permanent magnet (14) and greater than the width of the air gap (5), wherein the flux barrier (17) has a projection (16) in the region of the surface (11) of the rotor body (12), **characterized in that** the projection is directed in the direction of the pole gaps.

2. Electrical machine according to Claim 1, **characterized in that** the width b_{b} of the flux barrier (17) is greater than the thickness hₘ of the permanent magnet (14).

3. Electrical machine according to either of Claims 1 and 2, **characterized in that** the width b_{b} of the flux barrier (17) is at least twice as large as the thickness h_{b} of the flux barrier (17).

4. Electrical machine according to one of the preceding claims, **characterized in that** the flux barrier (17) is inclined in the direction of the pole centre.

5. Electrical machine according to one of the preceding claims, **characterized in that** the magnet opening angle α is greater than the pole angle β.

6. Electrical machine according to one of Claims 1-5, **characterized in that** the permanent magnets (14) are oriented perpendicularly in relation to the radial axis (7) of the rotor body (12).

7. Electrical machine according to Claim 6, **characterized in that** at least one flux barrier (17) is provided in the region of the side edges (15) of the permanent magnets (14).

8. Electrical machine according to one of Claims 1-5, **characterized in that** the permanent magnets (14) are oriented in the radial direction in the interior of the rotor body (12).

9. Electrical machine according to one of Claims 1-5, **characterized in that** in each case two permanent magnets (14) are oriented in a substantially V-shaped manner in relation to one another in the interior of the rotor body (12) .

10. Electrical machine according to either of Claims 8 and 9, **characterized in that** at least one flux barrier (17) is provided in the region of the side edges (15) of the permanent magnets (14), which side edges face the surface (11) of the rotor body (12).

## Revendications

1. Machine électrique, en particulier machine synchrone à aimants permanents, comprenant un stator (20), un rotor (10) monté à rotation à l'intérieur du stator (20) et un entrefer (5) ménagé entre le stator (20) et le rotor (10), le rotor (10) comprenant au moins un corps de rotor (12), un aimant permanent cuboïde (14) placé à l'intérieur du corps de rotor (12) et une barrière de flux (17) placée dans la région située entre l'aimant permanent (14) et la surface (11) du corps de rotor (12), l'aimant permanent (14) étant disposé dans un pôle du rotor (10) et des espaces interpolaires étant formés sur un bord du pôle, la section transversale de l'aimant permanent (14) étant rectangulaire et la barrière de flux étant en forme de fente, l'épaisseur de l'aimant permanent (14) ou de la barrière de flux étant à chaque fois la plus petite dimension des deux dimensions de la section transversale correspondante rectangulaire ou en forme de fente, l'épaisseur h_{b} de la barrière de flux (17) étant inférieure à l'épaisseur hₘ de l'aimant permanent (14) et supérieure à la largeur de l'entrefer (5), la barrière de flux (17) comportant une saillie (16) dans la région de la surface (11) du corps de rotor (12),
**caractérisée en ce que**
la saillie est dirigée vers l'espace interpolaire.

2. Machine électrique selon la revendication 1, **caractérisée en ce que** la largeur b_{b} de la barrière de flux (17) est supérieure à l'épaisseur hₘ de l'aimant permanent (14).

3. Machine électrique selon l'une des revendications 1 ou 2, **caractérisée en ce que** la largeur b_{b} de la barrière de flux (17) est au moins deux fois plus grande que l'épaisseur h_{b} de la barrière de flux (17).

4. Machine électrique selon l'une des revendications précédentes, **caractérisée en ce que** la barrière de flux (17) est inclinée en direction du milieu des pôles.

5. Machine électrique selon l'une des revendications précédentes, **caractérisée en ce que** l'angle d'ouverture magnétique α est supérieur à l'angle du pôle β.

6. Machine électrique selon l'une des revendications 1 à 5, **caractérisée en ce que** les aimants permanents (14) sont orientés perpendiculairement à un axe radial (7) du corps de rotor (12).

7. Machine électrique selon la revendication 6, **caractérisée en ce qu'**au moins une barrière de flux (17) est prévue dans la région des bords latéraux (15) des aimants permanents (14).

8. Machine électrique selon l'une des revendications 1 à 5, **caractérisée en ce que** les aimants permanents (14) sont orientés dans la direction radiale à l'intérieur du corps de rotor (12).

9. Machine électrique selon l'une des revendications 1 à 5, **caractérisée en ce que** deux aimants permanents (14) sont orientés sensiblement en forme de V l'un par rapport à l'autre à l'intérieur du corps de rotor (12).

10. Machine électrique selon l'une des revendications 8 ou 9, **caractérisée en ce qu'**au moins une barrière de flux (17) est prévue dans la région des bords latéraux (15), dirigés vers la surface (11) du corps de rotor (12), des aimants permanents (14).
